# FASCICULE DE BREVET EUROPEEN

(11) **EP 2 737 669 B1**
(45) Date de publication et mention de la délivrance du brevet: **12.07.2017**
(21) Numéro de dépôt: 12750408.2
(22) Date de dépôt: 13.07.2012
(51) Int. Cl.: H04L 12/70, H04J 3/06

(54) **TECHNIQUE D'ACHEMINEMENT DE MESSAGES DE SYNCHRONISATION**
VERFAHREN ZUR UMLEITUNG VON SYNCHRONISATIONSNACHRICHTEN
METHOD OF ROUTING SYNCHRONISATION MESSAGES

(30) Priorité: 25.07.2011 FR 1156729
(43) Date de publication de la demande: 04.06.2014
(73) Titulaire: Orange, 75015 Paris (FR)
(72) Inventeur: JOBERT, Sébastien, F-22140 Begard (FR); JOUNAY, Frédéric, CH-1040 Echallens (CH)
(86) Numéro de dépôt international: PCT/FR2012/051677
(87) Numéro de publication internationale: WO 2013/014360

(56) Documents cités:
- EP-A1- 1 919 127
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 juillet 2008 (2008-07-24), pages C1-269, XP017604130, ISBN: 978-0-7381-5400-8
- Hans Weibel: "Technology Update on IEEE 1588: The Second Edition of the High Precision Clock Synchronization Protocol", , 2009, pages 1-8, XP002670903, Extrait de l'Internet: URL:http://www.ines.zhaw.ch/fileadmin/user _upload/engineering/_Institute_und_Zentren /INES/Downloads/Technology_Update_IEEE1588 _v2.pdf [extrait le 2012-03-02]

## Description

L'invention se situe dans le domaine des réseaux de communication, et plus particulièrement dans le domaine de la synchronisation dans ces réseaux.

L'évolution des réseaux mobiles fait apparaître un besoin nouveau en termes de synchronisation à fournir aux stations de base : en plus d'une synchronisation commune en fréquence, les stations de base peuvent avoir besoin d'une synchronisation commune en phase et/ou temps, avec une exactitude très contraignante de l'ordre de la microseconde.

Lorsque ce type de synchronisation est délivré par le réseau, les équipements d'un réseau de communication par paquets ou de transport doivent disposer de fonctions matérielles dédiées au transport d'une information de synchronisation, permettant d'éviter un phénomène de variation de temps de transfert principalement créé par les temps d'attente variables des messages de synchronisation dans les mémoires tampons des équipements.

La plupart des solutions proposées utilise un protocole de mise à l'heure, tel que le protocole PTP, pour « Précision Time Protocol ». La version 2 de ce protocole, PTPv2, est définie par le standard IEEE1588-2008.

Dans le cas du protocole PTPv2, deux types de support matériel au niveau des équipements du réseau de transport sont définis :
- « Boundary Clock » ou « horloge de frontière » en français : un support matériel pour une horloge de ce type est composé de ports PTP, un d'entre eux étant dans un état « esclave » et les autres étant dans un état « maître ». Une référence de synchronisation est obtenue à partir de messages de synchronisation reçus sur un port PTP « esclave » et est maintenue localement au niveau de l'équipement. Cette référence de synchronisation est redistribuée vers d'autres équipements : de nouveaux paquets de synchronisation sont générés et envoyés à partir des ports PTP « maître ».
- « Transparent Clock » : les paquets portant des messages de synchronisation sont acheminés comme les autres paquets de trafic à travers l'équipement du réseau de transport, mais le temps de transit de certains de ces paquets portant les messages de synchronisation à travers l'équipement, appelé « residence time », est déterminé précisément et est renseigné par modification du paquet portant le message de synchronisation en sortie de l'équipement. En pratique, la somme des « residence time » est indiquée dans un champ particulier du message de synchronisation PTPv2, appelé «correction field », et permet à l'équipement destinataire de déterminer la variation du temps de transfert à partir des estampilles temporelles contenues dans le message de synchronisation PTPv2. Le message de synchronisation PTPv2 peut ainsi être traité comme s'il n'avait pas subi de variation de temps de transfert à travers les équipements du réseau.

Les messages de synchronisation sont émis par un port PTP maître d'un équipement du réseau à destination d'un port PTP esclave d'un autre équipement du réseau. Les étapes suivantes sont mises en oeuvre au niveau d'un équipement intermédiaire du réseau, comportant un support matériel pour PTP du type « Transparent Clock » :
- détection d'un message de synchronisation PTPv2 dans un flux de paquets reçu sur un port activé PTPv2 et horodatage du paquet à l'instant d'arrivée ;
- acheminement du paquet portant le message de synchronisation PTPv2, c'est-à-dire lecture de l'entête du paquet afin de déterminer vers quel(s) port(s) de sortie le paquet doit être acheminé. Il est ici souligné qu'il est acheminé comme les autres paquets reçus, c'est-à-dire en utilisant le mode de transfert de paquets supporté par l'équipement ;
- pour chaque port de sortie déterminé, modification du champ « correction field » dans la charge utile du paquet portant le message de synchronisation pour y ajouter le temps de transit «residence time » mesuré à partir des instants d'arrivée et d'émission du paquet puis émission du paquet modifié sur le port de sortie.

Le document EP 1919127 décrit un équipement intermédiaire de réseau utilisable dans un tel mécanisme de routage, au sein duquel des correspondances entre ports d'entrée et ports de sortie sont enregistrées dans une table de routage afin de déterminer vers quel port de sortie acheminer un paquet reçu sur un port d'entrée de cet équipement.

Les messages de synchronisation peuvent être transmis en mode multidiffusion (multicast) ou bien en mode point-à-point (unicast) en indiquant l'adresse du port PTP esclave dans le réseau de transport. Ce type de support matériel pour PTP présente toutefois un certain nombre d'inconvénients.

L'équipement intermédiaire doit modifier le champ « correction field » directement dans la charge utile (Payload) du paquet portant le message de synchronisation PTPv2 bien que n'étant pas le destinataire de ce paquet. Il intervient ainsi au-delà des couches qu'il doit traiter pour acheminer le paquet. Cette action correspond à une violation de couche au niveau protocolaire.

De plus, l'équipement intermédiaire doit être apte à déterminer l'emplacement dans cette charge utile du champ à modifier, ce qui dans certains cas, par exemple lorsqu'il y a une encapsulation intermédiaire pour l'acheminement du paquet, n'est pas immédiat. Il faut alors lui indiquer par configuration le type d'encapsulation utilisé.

Il est également souligné, que pour certains échanges, les chemins suivis par les messages de synchronisation PTPv2 dans le sens descendant du port PTP maître vers le port PTP esclave et dans le sens montant doivent être identiques, afin de ne pas introduire d'asymétrie, ce qui est contraignant dans un réseau opérationnel.

Un des buts de l'invention est de remédier à des insuffisances/inconvénients de l'état de la technique et/ou d'y apporter des améliorations.

Selon un premier aspect, l'invention a pour objet un procédé d'acheminement de messages de synchronisation dans un réseau de communication par paquets, comprenant les étapes suivantes mises en oeuvre par un équipement du réseau :
- détection d'un paquet portant un message de synchronisation dans un flux de paquets ;
- détermination d'au moins un port de sortie ;
- émission d'un paquet portant le message de synchronisation sur le port de sortie déterminé, le message de synchronisation étant modifié à l'aide d'une information représentative d'un temps de transit au niveau dudit équipement.

Le procédé est remarquable en ce qu'il comprend en outre une étape de configuration d'une table d'acheminement de synchronisation, dans laquelle est mémorisée au moins une association entre un port d'entrée et au moins un port de sortie, et, lorsque le paquet portant le message de synchronisation reçu indique qu'un acheminement local est à effectuer, le port de sortie pour ce paquet est déterminé en fonction d'un port d'entrée sur lequel est reçu le paquet et par lecture de la table d'acheminement de synchronisation.

Il est rappelé ici que le mode de traitement des messages de synchronisation décrit correspond à celui mis en oeuvre par un équipement comportant une horloge transparente ou « Transparent Clock ».

Les paquets dans le réseau de communication sont acheminés au moyen d'une table d'acheminement, dite table d'acheminement globale.

La table d'acheminement de synchronisation est définie localement au niveau de l'équipement intermédiaire. Par acheminement local, on comprend qu'il s'agit ici d'un acheminement au moyen de la table d'acheminement de synchronisation. Celle-ci est dédiée à l'acheminement des messages de synchronisation indiquant qu'un acheminement local est à effectuer et uniquement à ceux-ci. Les autres messages de synchronisation n'indiquant pas qu'un acheminement local est à effectuer sont acheminés en fonction des informations contenues dans l'entête du paquet les portant et d'une table d'acheminement globale de l'équipement, dédiée à l'acheminement dans le réseau de communication par paquets. Ces autres messages de synchronisation sont transportés dans le réseau de communication par paquets en indiquant l'adresse du port PTP esclave ou bien celle du port PTP maître.

Ainsi, pour ces messages de synchronisation indiquant qu'un acheminement local est à effectuer, transmis d'un port PTP maître vers un ou des ports PTP esclaves, on conserve un des avantages du mode multidiffusion par rapport à un mode point-à-point. En effet, le port PTP maître n'a pas besoin de connaître une adresse d'un port PTP esclave pour émettre le message de synchronisation. Selon l'invention, il lui suffit d'indiquer dans le paquet portant le message de synchronisation qu'un acheminement local est à effectuer. Le fonctionnement et la configuration de l'équipement intégrant le port PTP maître restent simples comme pour le mode multidiffusion.

De plus, un message de synchronisation PTP indiquant qu'un acheminement local est à effectuer, émis d'un port PTP esclave à destination du port PTP maître, va également être acheminé par la table d'acheminement de synchronisation. Par configuration de cette table, il s'agit d'un mode point-à-point. Le port PTP esclave n'a pas besoin de connaître l'adresse dans le réseau de communication par paquets du port PTP maître. Le message de synchronisation est ainsi transmis de proche en proche et acheminé par une décision locale à chaque équipement traversé. Cette décision locale est par définition indépendante d'une architecture de bout en bout et n'impose donc pas à un équipement comportant un port PTP maître d'avoir le même mode d'acheminement de paquets au niveau de la même couche OSI qu'un équipement comportant un port PTP esclave et réciproquement.

On construit ainsi un arbre de diffusion multicast bidirectionnel, permettant aux ports PTP esclaves de répondre au port PTP maître et uniquement à celui-ci, et garantissant que les messages utilisent dans les deux sens les mêmes chemins.

Le message de synchronisation reçu est à destination de l'équipement intermédiaire grâce à l'indication qu'un acheminement local est à effectuer. Le ou les nouveau(x) messages de synchronisation émis sont quant à eux généré(s) à partir du message de synchronisation reçu, en le modifiant préalablement notamment pour ajouter le temps de transit mesuré au champ « correction field ». Il n'y a plus de violation de couche par rapport au fonctionnement classique d'une horloge de type « Transparent Clock ». La mise en oeuvre au niveau d'un équipement est également simplifiée, la position de la charge utile PTP étant connue.

Le procédé permet d'éviter la mise en place complexe d'un plan de transfert dédié à la synchronisation dans le réseau de communication par paquets en remplaçant cette opération par une configuration locale au niveau de chaque équipement réseau. Il permet également de déployer un réseau de synchronisation mélangeant des horloges de type « Transparent Clock » et des horloges de type « Boundary Clock ».

Selon une caractéristique particulière du procédé, une adresse locale pour le protocole de synchronisation, comprise dans le paquet portant le message de synchronisation reçu, indique qu'un acheminement local est à effectuer.

Une adresse locale pour le protocole de synchronisation peut être utilisée pour indiquer qu'un acheminement local est à effectuer. Il s'agit par exemple d'une adresse MAC multicast locale 01-80-C2-00-00-0E réservée pour le protocole PTPv2. Aucune connaissance de l'adresse de l'équipement voisin n'est requise. Le nouveau message de synchronisation est émis directement sur le ou les port(s) de sortie déterminés à partir de la table locale d'acheminement de synchronisation.

Un équipement intermédiaire recevant le message de synchronisation mais ne mettant pas en oeuvre le protocole PTPv2 ne va pas traiter le paquet lorsqu'un adressage local est utilisé et le paquet est donc détruit. On évite ainsi la propagation d'un message de synchronisation à travers un équipement ne fournissant pas de support pour PTPv2. Un tel message de synchronisation entraînerait en effet une erreur significative de synchronisation au niveau du port PTP esclave.

Selon une autre caractéristique particulière, le message de synchronisation reçu portant une information relative à un domaine de synchronisation, le port de sortie est déterminé en outre en fonction de ladite information.

Le domaine de synchronisation correspond à un ensemble d'équipements dont les horloges sont synchronisées entre elles. L'équipement intermédiaire doit acheminer différemment le message de synchronisation en fonction du domaine de synchronisation.

La table d'acheminement locale comprend dans ce cas un acheminement en fonction du domaine de synchronisation. Ceci permet d'établir si nécessaire des topologies de diffusion de synchronisation différentes (par exemple, pour des applications différentes) passant par les mêmes équipements du réseau.

Dans un autre mode de réalisation, le domaine de synchronisation n'est pas pris en compte pour mettre en oeuvre l'acheminement. Il est rappelé que dans ce cas, le port PTP esclave ne traite pas des messages de synchronisation indiquant un domaine de synchronisation autre que celui auquel il appartient.

Selon une autre caractéristique particulière, un message de synchronisation requérant une mesure de retard porte une adresse de l'équipement émetteur du message et un équipement traitant le message obtient l'adresse de l'équipement émetteur à partir du message pour émettre un message de synchronisation de réponse à destination de l'adresse de l'émetteur.

Selon une autre caractéristique particulière, un équipement récepteur d'un message de synchronisation requérant une mesure de retard obtient l'adresse de l'équipement émetteur à partir de l'entête du paquet portant ledit message pour émettre un message de synchronisation de réponse à destination de l'adresse de l'émetteur.

Selon une autre caractéristique particulière, l'équipement intermédiaire reçoit un message de synchronisation requérant une mesure de retard, extrait du message reçu un identifiant PTP et un numéro de séquence, et mémorise un identifiant du port par l'intermédiaire duquel le message est reçu en association avec l'identifiant PTP et le numéro de séquence extraits, pour acheminer ultérieurement un message de synchronisation de réponse comprenant l'identifiant PTP et le numéro de séquence sur le port mémorisé en association.

Selon un deuxième aspect, l'invention concerne un équipement d'acheminement de messages de synchronisation dans un réseau de communication par paquets, comprenant :
- des moyens de détection d'un paquet portant un message de synchronisation dans un flux de paquets ;
- des moyens de détermination d'un port de sortie ;
- des moyens de modification du message de synchronisation à l'aide d'une information représentative d'un temps de transit au niveau dudit équipement ;
- des moyens d'émission d'un paquet portant le message de synchronisation modifié sur le port de sortie déterminé,
caractérisé en ce que l'équipement comprend en outre des moyens de configuration d'une table d'acheminement de synchronisation, dans laquelle est mémorisée une association entre un port d'entrée et au moins un port de sortie, et, des moyens de vérification, agencés pour vérifier que le paquet portant le message de synchronisation reçu indique qu'un acheminement au moyen de la table d'acheminement de synchronisation est à effectuer, et en ce que les moyens de détermination sont en outre agencés pour déterminer le port de sortie pour ledit paquet en fonction d'un port d'entrée sur lequel est reçu le paquet et par lecture de la table d'acheminement de synchronisation.

Selon un troisième aspect, l'invention concerne un système d'acheminement de messages de synchronisation comprenant au moins un équipement selon le deuxième aspect et un équipement agencé pour émettre un paquet portant un message de synchronisation et indiquant qu'un acheminement local est à effectuer.

Selon une caractéristique particulière, le système comprend en outre des équipements comportant un support matériel de type « Boundary Clock » défini dans le standard PTPv2.

Selon un quatrième aspect, l'invention concerne également un programme d'ordinateur comportant des instructions pour la mise en oeuvre du procédé d'acheminement de messages de synchronisation selon le premier aspect, mises en oeuvre par un équipement, lorsque ce programme est exécuté par un processeur.

L'invention sera mieux comprise à l'aide de la description suivante de modes de réalisation particuliers du système de l'invention, en référence aux dessins annexés sur lesquels :
- la figure 1 représente un système d'acheminement de messages de synchronisation dans un réseau de communication par paquets ;
- la figure 2 représente les étapes d'un procédé d'acheminement de messages de synchronisation mis en oeuvre dans un équipement du réseau de communication selon un mode particulier de réalisation de l'invention ;
- la figure 3 représente un équipement du réseau de communication dans un mode particulier de réalisation de l'invention.

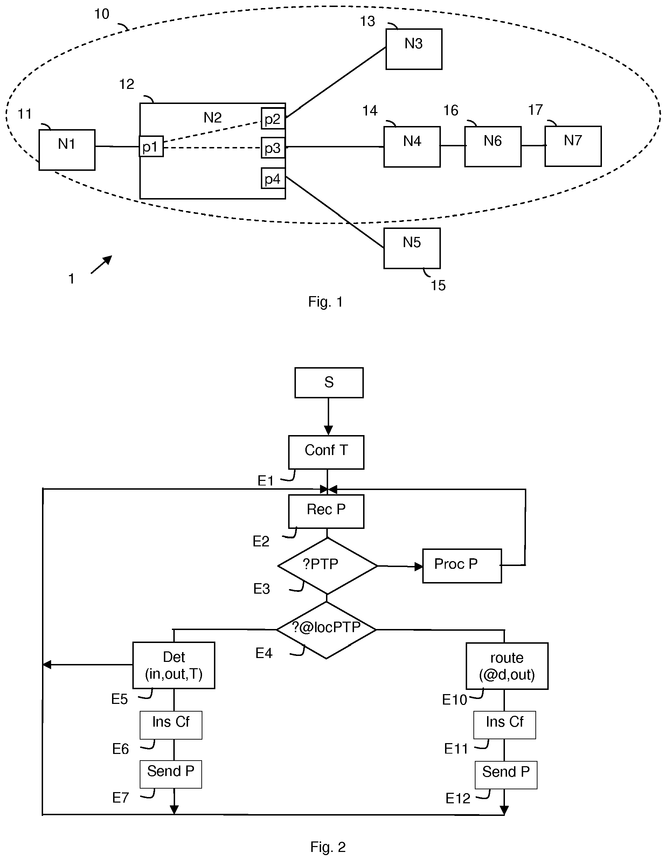

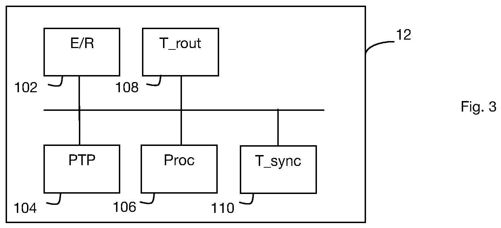

Sur la figure 1 est représenté un système 10 d'acheminement de messages de synchronisation dans un réseau 1 de communication par paquets. Le réseau 1 de communication par paquets est par exemple un réseau IP ou un réseau à commutation d'étiquettes MPLS, pour « Multi-Protocol Label Switching » ou bien Ethernet. Il comprend des équipements d'acheminement, dont plusieurs 11-17 d'entre eux représentés sur la figure 1, agencés pour acheminer des paquets dans le réseau. Un tel équipement d'acheminement 11-17 comprend des ports d'entrée/sortie, agencés pour recevoir et émettre des paquets. On rappelle ici qu'un paquet à acheminer dans le réseau de communication par paquets comprend notamment dans un entête une adresse de destination. L'équipement d'acheminement 12, 14, 16 comprend une table d'acheminement globale 108, représentée sur la figure 3, associant à une adresse de destination un port de sortie. Ainsi, sur réception d'un paquet, l'équipement d'acheminement 12, 14, 16 vérifie si le paquet reçu lui est destiné, et si ce n'est pas le cas, détermine à l'aide de l'adresse de destination du paquet reçu et de la table d'acheminement globale 108 le port de sortie du paquet. L'équipement d'acheminement émet le paquet sur le port de sortie déterminé. La configuration de cette table d'acheminement globale 108 s'effectue selon des procédures connues, par exemple à l'aide d'échange de messages protocolaires, et n'est pas décrite plus précisément ici. Dans un réseau à commutation d'étiquettes MPLS, l'équipement d'acheminement 12, 14, 16 comprend une table d'acheminement globale, associant à une étiquette d'entrée une étiquette de sortie et un port de sortie.

On se place par la suite dans le cas particulier de la distribution d'une synchronisation à l'aide de messages de synchronisation conformes au protocole PTPv2. Un message de synchronisation PTPv2 est porté par un paquet acheminé dans le réseau de communication par paquets. Le système 10 d'acheminement de messages de synchronisation comprend un ensemble d'équipements 11-14, 16-17 appartenant à un même domaine de synchronisation. Un domaine de synchronisation permet d'identifier une pluralité d'horloges synchronisées entre elles.

L'équipement 11 est un équipement maître, c'est-à-dire qu'il est agencé pour distribuer une synchronisation à destination d'équipements esclaves du domaine de synchronisation, dont deux d'entre eux 13 et 17 sont représentés sur la figure 1. L'équipement maître comprend par exemple une horloge de type « Ordinary Clock » agissant en tant qu'horloge maître principale (« Grandmaster ») ou bien une horloge de type « Boundary Clock » ayant l'ensemble de ses ports dans un état « maître ». Les équipements esclaves correspondent par exemple à des horloges « Slave Only Ordinary Clock ». Les messages de synchronisation entre l'équipement maître 11 et l'équipement esclave 13 transitent par l'intermédiaire de l'équipement 12. Les messages de synchronisation entre l'équipement maître 11 et l'équipement esclave 17 transitent par l'intermédiaire des équipements 12, 14, 16. L'équipement 15 n'appartient pas au domaine de synchronisation et utilise par exemple une horloge locale pour son fonctionnement. Aucune limitation n'est attachée au nombre d'équipements maîtres, ni à celui d'équipements esclaves, ni à celui d'équipements intermédiaires.

Dans un mode de réalisation particulier, les équipements intermédiaires 12, 14, 16 comportent un support matériel pour le protocole PTPv2 de type « Transparent Clock ».

On rappelle ici que dans une horloge de type « Transparent Clock », un message de synchronisation PTP reçu est horodaté à l'aide de l'instant d'arrivée, puis acheminé dans l'équipement vers un ou des port(s) de sortie. Avant émission, l'équipement détermine un temps de transit à partir de l'instant d'arrivée et de l'instant d'émission de chaque message et modifie dans la charge utile du paquet initial portant le message de synchronisation PTPv2 un champ appelé « Correction Field », juste avant l'émission de celui-ci sur le port de sortie.

On se place par la suite au niveau de l'équipement intermédiaire 12. Selon l'invention, les ports d'entrée/sortie de cet équipement intermédiaire 12 sont configurés pour le protocole PTPv2. Un port peut se trouver dans trois états d'activation pour ce protocole.

Un premier état « désactivé » est associé à un port sur lequel des messages de synchronisation PTPv2 éventuellement reçus sont ignorés.

Un deuxième état « activé, amont » est associé à un port sur lequel des messages de synchronisation PTPv2 émis par un port PTP maître, directement ou bien par l'intermédiaire d'un équipement intermédiaire, sont susceptibles d'être reçus. Un port «activé, amont » est connecté directement ou indirectement à un port de l'équipement maître ou bien à un port PTP maître d'un équipement comportant un support PTPv2 de type « Boundary Clock », présenté en partie introductive de la demande. Un port « activé, amont » ne doit pas être connecté à un port PTP esclave ou bien à un autre port configuré en « activé, amont ».

Un troisième état « activé, aval » est associé à un port sur lequel des messages de synchronisation PTPv2 émis par un port PTP esclave, directement ou indirectement, sont susceptibles d'être reçus. Un port « activé, aval » doit être connecté directement ou indirectement à un port esclave PTPv2 tel que défini dans ce protocole, c'est-à-dire au port d'une horloge « Slave-Only Ordinary Clock » ou au port PTP esclave d'un équipement mettant en oeuvre le support PTPv2 de type « Boundary Clock ». Un port « activé, aval » ne doit pas être connecté à un port PTP maître, tel que défini dans ce protocole, c'est-à-dire soit un « GrandMaster », soit un port PTP maître d'un équipement comportant un support PTPv2 de type « Boundary Clock ». Il ne doit pas non plus être connecté à un autre port PTPv2 dans le troisième état « activé, aval ».

Une table d'acheminement de synchronisation 110, représentée sur la figure 3, mémorise selon l'invention une association entre un port « activé, amont » et un ou des ports « activé, aval ».

Les règles suivantes sont à respecter pour ces associations :
- un port dans le deuxième état « activé, amont » est associé à un ou plusieurs autres ports dans le troisième état « activé, aval » ;
- un port dans le deuxième état « activé, amont » ne peut pas être associé à un autre port dans le deuxième état « activé, amont » ;
- un port dans le troisième état « activé, aval » est associé à un et un seul autre port dans le deuxième état « activé, amont » ;
- un port dans le troisième état « activé, aval » ne peut pas être associé à un autre port dans le troisième état « activé, aval ».

Ainsi, l'équipement intermédiaire 12, tel que représenté à la figure 1, comprend quatre ports PTPv2 notés p1 p2, p3, p4 :
- le port p1 est « activé, amont » et est connecté à l'équipement maître 11 ;
- les ports p2 et p3 sont dans le troisième état « activé, aval » et sont respectivement connectés aux équipements esclave 13 et intermédiaire 14 ;
- le port p4 est dans le premier état « désactivé ».

La table d'acheminement de synchronisation 110 mémorise :
- les états des différents ports p1, p2, p3, p4, notamment l'état du port p4 « désactivé » et les états des ports p1 p2, p3 « activé », et
- une association entre le port p1 dans le deuxième état « activé, amont » et les ports p2 et p3 dans le troisième état « activé, aval ».

Ainsi, lorsqu'un message de synchronisation PTPv2 indiquant qu'un acheminement local est à effectuer est reçu sur le port p1 celui-ci est un port d'entrée PTPv2 et les ports p2 et p3 sont les ports de sortie PTPv2 associés. Réciproquement, lorsqu'un message de synchronisation PTPv2 indiquant qu'un acheminement local est à effectuer est reçu sur le port p2, celui-ci est un port d'entrée PTPv2 et le port p1 est le port de sortie PTPv2 associé ; lorsqu'un message de synchronisation PTPv2 est reçu sur le port p3, celui-ci est un port d'entrée PTPv2 et le port p1 est le port de sortie associé. Un message de synchronisation PTPv2 reçu sur le port p4 est ignoré.

Le procédé d'acheminement de messages de synchronisation tel qu'il est mis en oeuvre dans l'équipement 12 du réseau de communication par paquets va maintenant être décrit en relation avec la figure 2.

Dans une étape E1 de configuration, la table d'acheminement de synchronisation 110 telle que décrite précédemment est configurée. A l'issue de cette étape E1 de configuration, elle mémorise ainsi une ou plusieurs associations entre un port « activé, amont » et au moins un port «activé, aval », c'est-à-dire entre un port d'entrée et au moins un port de sortie. Elle est par exemple configurée par des procédures de maintenance locales ou bien par l'intermédiaire d'un administrateur de réseau. Aucune limitation n'est attachée à la manière de configurer cette table d'acheminement de synchronisation.

Dans une étape E2, l'équipement 12 est en attente de réception d'un paquet sur un de ses ports d'entrée/sortie.

L'équipement 12 vérifie ensuite dans une étape E3 si le paquet reçu porte un message de synchronisation PTPv2. On ne décrit pas ici le cas de la réception d'un paquet qui ne porte pas un message de synchronisation. Le traitement d'un tel paquet ne fait pas l'objet de la présente demande. Le paquet portant le message de synchronisation est ainsi détecté dans un flux de paquets reçu.

L'équipement 12 vérifie ensuite dans une étape E4 si le paquet portant le message de synchronisation PTPv2 reçu indique qu'un acheminement local du paquet est à effectuer. Plus précisément dans le mode de réalisation décrit, un acheminement local est à effectuer lorsque le paquet reçu portant le message de synchronisation PTPv2 comprend comme adresse de destination une adresse définie comme locale pour le protocole PTP. Il s'agit par exemple d'une adresse MAC multicast locale 01-80-C2-00-00-0E réservée pour le protocole PTPv2. Dans un autre mode de réalisation, un acheminement local est à effectuer lorsque le paquet a comme adresse de destination celle de l'équipement 12 lui-même. Dans encore un autre mode de réalisation, un acheminement local est à effectuer lorsqu'un champ donné du message de synchronisation porte cette indication. Dans un réseau à commutation d'étiquettes MPLS, un acheminement local est à effectuer lorsque l'étiquette d'entrée correspond à une étiquette donnée.

Si le paquet portant le message de synchronisation PTPv2 reçu n'indique pas qu'un acheminement local est à effectuer, dans une étape E10, l'équipement 12 horodate le message de synchronisation PTPv2 à l'instant d'arrivée et détermine à partir de la table d'acheminement globale 108 le port de sortie. Dans un réseau de communication de type IP, l'adresse de destination du paquet est prise en compte pour déterminer l'acheminement du paquet. Dans un réseau à commutation d'étiquettes de type MPLS, l'étiquette d'entrée est prise en compte pour déterminer l'acheminement du paquet.

Juste avant l'émission du paquet portant le message de synchronisation PTPv2, dans une étape E11, l'équipement 12 détermine un instant d'émission, détermine à partir des instants d'arrivée et d'émission un temps de transit dans l'équipement 12 et modifie le champ « Correction Field » du message de synchronisation compris dans la charge utile du paquet portant le message de synchronisation PTPv2. Le message de synchronisation PTPv2 est ainsi modifié à l'aide d'une information représentative d'un temps de transit au niveau l'équipement 12. Il s'agit ici du traitement classique d'un message de synchronisation de type « Event », tels que des messages « Sync », « Delay_Request », mis en oeuvre par un équipement comprenant un support matériel de type « Transparent Clock ». On souligne ici qu'il est également possible de transmettre le champ « Correction Field » dans un message de synchronisation « Follow Up ». De plus, pour certains messages de synchronisation PTP, par exemple le message de synchronisation « Delay_Response », conformément au standard PTP, et dans certaines implémentations, l'équipement 12 ne détermine pas le temps de transit et ne modifie pas le message de synchronisation avant émission.

Dans une étape E12, le paquet portant le message de synchronisation modifié est émis sur le port de sortie déterminé à l'étape E10.

Le procédé d'acheminement de messages de synchronisation repasse ensuite à l'étape E2, en attente de réception d'un paquet.

Si à l'étape E4 on détermine que le paquet portant le message de synchronisation PTPv2 reçu indique qu'un acheminement local est à effectuer, dans une étape E5, l'équipement 12 détermine pour le port sur lequel le paquet a été reçu, appelé port d'entrée, si le message de synchronisation PTPv2 doit être acheminé.

Si le port d'entrée est dans le premier état « désactivé », le message de synchronisation PTPv2 n'est pas traité et le procédé d'acheminement de messages de synchronisation repasse à l'étape E2 en attente de réception d'un nouveau paquet.

Dans le cas contraire, l'équipement 12 détermine un ou plusieurs ports de sortie à partir de la table d'acheminement de synchronisation 110. Par exemple, si le paquet a été reçu sur le port p1 les ports p2 et p3 sont déterminés comme ports de sortie ; si le paquet a été reçu sur le port p2, le port p1 est défini comme port de sortie.

Le procédé d'acheminement de messages de synchronisation met ensuite en oeuvre une étape E6 au cours de laquelle le message de synchronisation PTPv2 est modifié à l'aide du temps de transit à l'équipement 12 pour mettre à jour le champ « correctionField ».

Le procédé d'acheminement de messages de synchronisation met ensuite en oeuvre une étape E7. Un paquet portant le message de synchronisation PTPv2 modifié est constitué en indiquant qu'un acheminement local est à effectuer puis est émis sur le port de sortie déterminé à l'étape E5. On souligne ici qu'il est également possible de transmettre le champ «Correction Field » dans un message de synchronisation « Follow Up »

Ces étapes E6 et E7 sont mises en oeuvre pour chacun des ports de sortie déterminés lors de la lecture de la table d'acheminement de synchronisation 110.

Le procédé d'acheminement de messages de synchronisation repasse ensuite à l'étape E2 en attente de réception d'un paquet.

Ainsi, grâce à la table d'acheminement de synchronisation 110, l'acheminement local des messages de synchronisation PTPv2 est le suivant :
- un message de synchronisation PTPv2 reçu sur un port dans le premier état « désactivé » est ignoré. Aucun message de synchronisation n'est émis en sortie de l'équipement ;
- un message de synchronisation PTPv2 reçu sur un port dans le deuxième état « activé, amont » est réémis après modification sur un ou plusieurs ports associés dans le troisième état « activé, aval ». Un ou plusieurs messages de synchronisation PTPv2 sont émis en sortie de l'équipement après modification pour chaque port associé conformément au fonctionnement d'une horloge de type « Transparent Clock » ;
- un message de synchronisation PTPv2 reçu sur un port dans le troisième état « activé, aval » est réémis après modification sur le port associé dans le deuxième état « activé, amont ». Un seul message de synchronisation PTPv2 est émis en sortie de l'équipement après modification conformément au fonctionnement d'une horloge de type « Transparent Clock ».

Le procédé d'acheminement de messages de synchronisation, tel que décrit dans sa branche comprenant les étapes E5, E6 et E7, respecte ainsi l'organisation en couches protocolaires, puisque l'équipement mettant en oeuvre ces étapes est le destinataire des messages PTPv2. De plus, la position de la charge utile PTP est connue à l'avance. Un plan de transfert spécifique pour les messages de synchronisation est ainsi créé. Il est également garanti que les messages de synchronisation PTPv2 dans le sens descendant et dans le sens montant suivent un même chemin.

Il est ici souligné qu'aucune modification n'est apportée au niveau de la façon dont est traité le contenu des messages de synchronisation PTPv2. Le traitement est en effet conforme à celui défini pour une horloge de type « Transparent Clock ».

Le procédé d'acheminement de messages de synchronisation peut avantageusement être mis en oeuvre lors d'un échange de messages de synchronisation PTPv2 entre un port PTP maître et un port PTP esclave. Un premier message de synchronisation PTPv2 « Sync » est émis par le port PTP maitre. Dans un mode de réalisation particulier, le port PTP esclave émet alors un deuxième message de synchronisation PTPv2 « Delay_Request » requérant une mesure de retard à destination du port PTP maître. En réponse à ce deuxième message de synchronisation PTPv2, le port PTP maître émet à destination du port PTP esclave un troisième message PTPv2 « Delay_Response » de réponse. A partir de l'instant d'émission du premier message PTPv2, de l'instant de réception de celui-ci, de l'instant d'émission du deuxième message PTPv2 et de l'instant de réception de celui-ci par le port PTP maître, et du temps de transit des messages de synchronisation indiqué dans le champ « correction field », le port PTP esclave peut alors corriger son horloge.

Les trois messages de synchronisation PTPv2 « Sync », « Delay_Request », « Delay_Response » peuvent être transmis en indiquant qu'un acheminement local est à effectuer. Dans le cas particulier où la table d'acheminement de synchronisation associe une pluralité de ports « activé, aval » à un port « activé, amont », le premier message de synchronisation PTPv2 « Sync » est transmis une fois modifié à une pluralité de port PTP esclaves. Chacun d'entre eux va émettre en retour un deuxième message de synchronisation « Delay_Request », défini à la table 26 du standard IEEE 1588-2008. Ce deuxième message de synchronisation va uniquement être transmis au port PTP maître grâce à la table d'acheminement locale. De plus, ce deuxième message comprend dans son entête PTP un champ « sourcePortIdentity » (table 18 du standard). Le port PTP maître va répondre par un troisième message de synchronisation PTPv2 « Delay_Response » pour chaque deuxième message reçu. Le troisième message de synchronisation PTPv2 comprend un champ « requestingPortIdentity » copié par le port PTP maître à partir du champ « sourcePortIdentity » reçu dans le deuxième message « Delay_Request ». Si ces troisièmes messages sont émis en indiquant qu'un acheminement local est à effectuer, des ports PTP esclaves vont recevoir un ou des troisième(s) message(s) qui ne leur est/sont pas destiné(s). Il est ici rappelé que conformément au standard, de tels ports PTP esclaves vont ignorer ces troisièmes messages qui ne leur sont pas destinés grâce au champ « requestingPortIdentity ». Le port PTP esclave destinataire du troisième message « Delay_Response » traite le troisième message conformément au standard. Ce mode de réalisation fonctionne quels que soient les types de réseaux de communication situés entre le port PTP maître et le port PTP esclave.

Dans un autre mode de réalisation, le port PTP maître peut également apprendre à partir du paquet portant le deuxième message de synchronisation « Delay_Request » l'adresse dans le réseau du port PTP esclave qui a émis ce deuxième message PTPv2. Il peut notamment obtenir cette adresse à partir de l'entête du paquet. Dans ce cas, le troisième message « Delay_Response » est émis en mode point-à-point en indiquant l'adresse de destination du port PTP esclave, et non en indiquant qu'un acheminement local est à effectuer. Il est acheminé de manière classique par un équipement intermédiaire, en mettant en oeuvre les étapes E10 à E12 précédemment décrites, utilisant la table d'acheminement globale 108. Ce mode de réalisation fonctionne lorsque l'équipement comprenant le port PTP maître communique avec l'équipement comprenant le port PTP esclave sur une même couche de transfert OSI, telle que Ethernet ou IP.

Dans encore un autre mode de réalisation, le port PTP esclave indique dans un nouveau champ « sourceAddress » du deuxième message de synchronisation « Delay_Request » sa propre adresse. Ainsi, le port PTP maître obtient l'adresse du port PTP esclave par lecture du deuxième message de synchronisation « Delay_Request » et transmet le troisième message de synchronisation « Delay_Response » uniquement à celui-ci. Ce mode de réalisation fonctionne lorsque l'équipement comprenant le port PTP maître communique avec l'équipement comprenant le port PTP esclave sur une même couche de transfert OSI, telle que Ethernet ou bien IP.

Dans encore un autre mode de réalisation, le port PTP esclave envoie le deuxième message de synchronisation « Delay_Request » en indiquant qu'un acheminement local est à effectuer. Lors de la réception d'un message de synchronisation « Delay_Request » par un équipement intermédiaire comprenant un support matériel PTP du type « Transparent Clock » conforme à l'invention, celui-ci extrait du message reçu un identifiant PTP du port PTP, indiqué dans le champ « sourcePortIdentity » du message, et un numéro de séquence, indiqué dans le champ « sequenceId » du message, et mémorise dans une table d'acheminement dynamique un identifiant du port par l'intermédiaire duquel le message est reçu, en association avec l'identifiant PTP et le numéro de séquence extraits. L'équipement intermédiaire achemine le message « Delay_Request » en utilisant la table d'acheminement de synchronisation. Une fois le message « Delay_Request » reçu, le port PTP maître envoie un troisième message de synchronisation « Delay_Response » en indiquant qu'un acheminement local est à effectuer. Conformément au standard, le port PTP maître recopie le champ « sourcePortIdentity » du message « Delay_Request » dans le champ « requestingPortIdentity » du message « Delay_Response » ; le port PTP maître recopie le champ « sequenceId » du message « Delay_Request » dans le champ « sequenceId » du message « Delay_Response ». Lors de la réception d'un message « Delay_Response », l'équipement intermédiaire obtient du message « Delay_Response » l'identifiant PTP et le numéro de séquence et détermine le port de sortie associé à ceux-ci. Le port de sortie correspond ainsi à celui par l'intermédiaire duquel le message « Delay_Request » a été reçu précédemment. L'équipement intermédiaire n'utilise donc pas la table d'acheminement de synchronisation pour traiter le message « Delay_Response » mais la table d'acheminement dynamique construite par l'équipement intermédiaire à partir des messages « Delay_Request » reçus. Si aucun port n'a été trouvé pour l'acheminement du message « Delay_Response » dans la table d'acheminement dynamique, celui-ci est soit supprimé, soit optionnellement acheminé selon la table d'acheminement de synchronisation. Les informations mémorisées par l'équipement intermédiaire dans la table d'acheminement dynamique suite à la réception d'un message « Delay_Request » sont maintenues pendant une durée prédéterminée. Cette durée doit être suffisante pour garantir que le message « Delay_Response » a été renvoyé par le port PTP maître. Elle est de l'ordre de quelques secondes. Ce mode de réalisation fonctionne indépendamment du mode d'acheminement global des paquets supporté par l'équipement comportant le port PTP maître, l'équipement comportant le port PTP esclave et les équipements intermédiaires.

Dans une variante à ces différents modes de réalisation, la table d'acheminement de synchronisation 110 comprend pour chaque association mémorisée une information relative à un domaine de synchronisation où cette association est valide. Un domaine de synchronisation permet d'identifier une pluralité d'horloges synchronisées entre elles.

Ainsi, lors de l'étape E5, l'équipement 12 obtient à partir du message de synchronisation PTPv2 reçu le numéro de domaine «domainNumber» » renseigné dans l'entête des messages PTPv2. La détermination du ou des ports de sortie s'effectue ainsi à partir du numéro de domaine et du port d'entrée. Ceci permet de prévoir un acheminement différent des messages de synchronisation PTPv2 en fonction du domaine de synchronisation.

Il est également possible de prévoir une table d'acheminement de synchronisation par domaine de synchronisation.

Ceci permet d'établir si nécessaire des topologies de diffusion de synchronisation différentes (par exemple, pour des applications différentes) passant par les mêmes équipements du réseau.

Un équipement 12 du système 10 d'acheminement de messages de synchronisation est représenté à la figure 3 selon un mode particulier de réalisation de l'invention.

L'équipement 12 comprend :
- la table d'acheminement globale 108 précédemment décrite ;
- la table d'acheminement de synchronisation 110 précédemment décrite :
- un module 102 d'émission/réception, agencé pour émettre et recevoir des paquets ;
- un module PTP 104, agencé pour mettre en oeuvre le protocole PTPv2 ;
- un module de traitement 106.

Le module de traitement 106 est notamment agencé pour :
- configurer la table d'acheminement de synchronisation 110 ;
- détecter si un paquet portant un message de synchronisation reçu par le module d'émission/réception 102 indique qu'un acheminement local est à effectuer ;
- acheminer un paquet reçu vers un port de sortie en fonction de la table d'acheminement globale 108 lorsque le paquet reçu n'indique pas qu'un acheminement local est à effectuer ;
- acheminer un paquet reçu vers un port de sortie en fonction de la table d'acheminement de synchronisation 110 lorsque le paquet reçu indique qu'un acheminement local est à effectuer et porte un message de synchronisation.

Le module PTP 104 détermine le temps de transit du paquet reçu et modifie le champ « correction field » du message de synchronisation comme décrit précédemment.

Le paquet modifié est ensuite émis par le module d'émission/réception 102 sur le port de sortie en indiquant qu'un acheminement local est à effectuer.

Dans un mode de réalisation particulier, l'équipement intermédiaire 12 comprend une table d'acheminement dynamique, non représentée sur la figure 3, agencée pour mémoriser une association entre un port par l'intermédiaire duquel un message « Delay_Response » est reçu, un identifiant PTP et un numéro de séquence. Dans ce mode de réalisation, le module de traitement 106 est agencé pour mémoriser l'association dans la table d'acheminement dynamique sur réception d'un message « Delay_request » et pour acheminer un message « Delay_Response » en fonction de la table d'acheminement dynamique comme décrit précédemment.

Les équipements 14, 16 comprennent des moyens similaires à ceux de l'équipement 12, décrit en relation avec la figure 3.

L'équipement 11, intégrant un port PTP maître, comprend notamment :
- un module d'émission/réception, agencé pour émettre et recevoir des paquets ;
- un module PTP, agencé pour mettre en oeuvre le protocole PTPv2 ;
- un module de traitement.

Le module de traitement de l'équipement 11 est notamment agencé pour transmettre des paquets portant des messages de synchronisation indiquant qu'un acheminement local est à effectuer.

Dans un mode de réalisation particulier, le module de traitement de l'équipement 11 est en outre agencé pour obtenir une adresse dans le réseau d'un équipement intégrant un port PTP esclave.

Un équipement 13, 17, intégrant un port PTP esclave, comprend notamment :
- un module d'émission/réception, agencé pour émettre et recevoir des paquets ;
- un module PTP, agencé pour mettre en oeuvre le protocole PTPv2 ;
- un module de traitement.

Le module de traitement de l'équipement 13, 17 est notamment agencé pour transmettre des paquets portant des messages de synchronisation indiquant qu'un acheminement local est à effectuer.

Dans un mode de réalisation particulier, le module de traitement de l'équipement 13, 17 est agencé pour insérer dans un champ « sourceAddress » d'un message « Delay_Request » sa propre adresse.

Les modules de traitement respectifs des équipements 11-14, 16-17 sont agencés pour mettre en oeuvre celles des étapes du procédé d'acheminement de messages de synchronisation précédemment décrit exécutées par l'équipement. Il s'agit de préférence de modules logiciels comprenant des instructions logicielles pour faire exécuter celles des étapes du procédé d'acheminement de messages de synchronisation précédemment décrit, mises en oeuvre par un équipement du réseau de communication par paquets. L'invention concerne donc aussi :
- un programme pour équipement, comprenant des instructions de programme destinées à commander l'exécution des étapes du procédé d'acheminement de messages de synchronisation précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Dans les modes de réalisation décrits, le système d'acheminement 10 de messages de synchronisation comprend une pluralité d'équipements dont :
- un équipement 11, comprenant un port PTP maître, apte à synchroniser une pluralité d'équipements 13, 17 intégrant un port PTP esclave ;
- des équipements intermédiaires 12, 14, 16 tels que décrits précédemment aptes à traiter des messages de synchronisation PTPv2, comportant un support matériel de type « Transparent Clock » selon l'invention.

Dans un autre mode de réalisation, le système d'acheminement 10 de messages de synchronisation peut comprendre un ou plusieurs équipements intermédiaires comprenant un support matériel de type « Boundary Clock ». A titre d'exemple non limitatif, il peut s'agir des équipements 14, 16. En effet, au niveau de tels équipements intermédiaires 14, 16, le message de synchronisation PTPv2 « Sync » est traité et permet de synchroniser localement l'horloge de l'équipement. De nouveaux paquets portant des messages de synchronisation PTPv2 « Sync » sont émis sur le ou les ports PTP maîtres reliant l'équipement intermédiaire à des ports PTP esclaves d'autres équipements.

Il est ici souligné qu'en cas d'erreur de conception du réseau de synchronisation, le système d'acheminement 10 de messages de synchronisation peut comprendre un ou plusieurs équipements intermédiaires, ne supportant pas le protocole PTP. Du fait de l'indication qu'un acheminement local est à effectuer, un message de synchronisation PTPv2 ne va pas être acheminé par un tel équipement intermédiaire vers l'équipement esclave. Ainsi, l'équipement esclave ne reçoit dans ce cas aucun message de synchronisation. En l'absence de l'indication qu'un acheminement local est à effectuer, un message de synchronisation entaché d'erreurs aurait été reçu.

L'invention permet ainsi de distribuer une horloge présentant les niveaux de précision requis, par exemple pour les réseaux mobiles LTE pour « Long Term Evolution » en mode TDD (« Time Division Duplex »), UMTS en mode TDD, W-CDMA (« Wideband Code Division Multiple Access ») en mode TDD, TD-SCDMA («Time Division Synchronous Code Division Multiple Access » en mode TDD, WiMax en mode TDD, des techniques de diffusion numérique telles que la télévision terrestre ou mobile (DVB-T, DVB-H), les réseaux mobiles LTE-A (Advanced) utilisant le mode MBSFN ("Multicast Broadcast Multimedia Services en mode Single Frequency Network") ou bien utilisant les fonctionnalités de CoMP (« Coordinated MultiPoint transmission and réception », également appelées network MIMO dans certains cas).

## Revendications

1. Procédé d'acheminement de messages de synchronisation dans un réseau de communication par paquets, dans lequel un paquet est acheminé au moyen d'une table d'acheminement, dite table d'acheminement globale, ledit procédé comprenant les étapes suivantes mises en oeuvre par un équipement du réseau :
- détection (E3) d'un paquet portant un message de synchronisation dans un flux de paquets ;
- détermination d'au moins un port de sortie ;
- émission d'un paquet portant le message de synchronisation modifié sur le port de sortie déterminé,
le message de synchronisation étant modifié à l'aide d'une information représentative d'un temps de transit au niveau dudit équipement ;
**caractérisé en ce que** le procédé comprend en outre :
- une étape (E1) de configuration d'une table d'acheminement de synchronisation, dans laquelle est mémorisée au moins une association entre un port d'entrée et au moins un port de sortie ;
- une étape (E4) de vérification que le paquet portant le message de synchronisation reçu indique qu'un acheminement au moyen de la table d'acheminement de synchronisation est à effectuer,
le port de sortie pour ledit paquet portant le message de synchronisation étant alors déterminé (E5) en fonction d'un port d'entrée sur lequel est reçu le paquet portant le message de synchronisation et par lecture de la table d'acheminement de synchronisation.

2. Procédé d'acheminement selon la revendication 1, dans lequel une adresse locale pour le protocole de synchronisation, comprise dans le paquet portant le message de synchronisation reçu, indique qu'un acheminement au moyen de la table d'acheminement de synchronisation est à effectuer.

3. Procédé d'acheminement selon la revendication 1, dans lequel, le message de synchronisation reçu portant une information relative à un domaine de synchronisation, le port de sortie est déterminé en outre en fonction de ladite information.

4. Procédé d'acheminement selon la revendication 1, dans lequel un message de synchronisation requérant une mesure de retard porte une adresse de l'équipement émetteur du message et un équipement traitant le message obtient l'adresse de l'équipement émetteur à partir du message pour émettre un message de synchronisation de réponse à destination de l'adresse de l'émetteur.

5. Procédé d'acheminement selon la revendication 1, dans lequel un équipement récepteur d'un message de synchronisation requérant une mesure de retard obtient l'adresse de l'équipement émetteur à partir de l'entête du paquet portant ledit message pour émettre un message de synchronisation de réponse à destination de l'adresse de l'émetteur.

6. Procédé d'acheminement selon la revendication 1, dans lequel l'équipement intermédiaire reçoit un message de synchronisation requérant une mesure de retard, extrait du message reçu un identifiant PTP et un numéro de séquence, et mémorise un identifiant du port par l'intermédiaire duquel le message est reçu en association avec l'identifiant PTP et le numéro de séquence extraits, pour acheminer ultérieurement un message de synchronisation de réponse comprenant l'identifiant PTP et le numéro de séquence sur le port mémorisé en association.

7. Équipement d'acheminement de messages de synchronisation dans un réseau de communication par paquets, dans lequel un paquet est acheminé au moyen d'une table d'acheminement, dite table d'acheminement globale, comprenant :
- des moyens de détection d'un paquet portant un message de synchronisation dans un flux de paquets ;
- des moyens de détermination d'un port de sortie ;
- des moyens de modification (104) du message de synchronisation à l'aide d'une information représentative d'un temps de transit au niveau dudit équipement ;
- des moyens d'émission (102) d'un paquet portant le message de synchronisation modifié sur le port de sortie déterminé,
**caractérisé en ce que** l'équipement comprend en outre :
- des moyens de configuration d'une table d'acheminement de synchronisation, dans laquelle est mémorisée une association entre un port d'entrée et au moins un port de sortie,
- des moyens de vérification, agencés pour vérifier que le paquet portant le message de synchronisation reçu indique qu'un acheminement au moyen de la table d'acheminement de synchronisation est à effectuer,
et **en ce que** les moyens de détermination sont en outre agencés pour déterminer le port de sortie pour ledit paquet portant le message de synchronisation en fonction d'un port d'entrée sur lequel est reçu le paquet portant le message de synchronisation et par lecture de la table d'acheminement de synchronisation.

8. Système (10) d'acheminement de messages de synchronisation comprenant au moins un équipement selon la revendication 7 et un équipement agencé pour émettre un paquet portant un message de synchronisation et indiquant qu'un acheminement au moyen de la table d'acheminement de synchronisation est à effectuer.

9. Système d'acheminement selon la revendication 8, comprenant en outre des équipements comportant un support matériel de type « Boundary Clock » défini dans le standard PTPv2.

10. Programme d'ordinateur comportant des instructions pour la mise en oeuvre du procédé d'acheminement de messages de synchronisation selon la revendication 1, mises en oeuvre par un équipement d'un réseau de communication par paquets, lorsque ce programme est exécuté par un processeur.

## Patentansprüche

1. Verfahren zum Transportieren von Synchronisationsnachrichten in einem Kommunikationsnetz durch Pakete, wobei ein Paket mittels einer Transporttabelle, die globale Transporttabelle genannt wird, transportiert wird, wobei das Verfahren die folgenden Schritte, die durch eine Netzanlage ausgeführt werden, umfasst:
- Detektieren (E3) eines Pakets, das eine Synchronisationsnachricht trägt, in einem Paketstrom;
- Bestimmen wenigstens eines Ausgangsports;
- Senden eines Pakets, das die modifizierte Synchronisationsnachricht trägt, auf dem bestimmten Ausgangsport,
wobei die Synchronisationsnachricht mit Hilfe einer Information modifiziert wird, die eine Transitzeit auf Höhe der Anlage darstellt;
**dadurch gekennzeichnet, dass** das Verfahren außerdem Folgendes umfasst:
- einen Schritt (E1) des Konfigurierens einer Synchronisationstransporttabelle, in der wenigstens eine Zuordnung zwischen einem Eingangsport und wenigstens einem Ausgangsport gespeichert ist;
- einen Schritt (E4) des Verifizierens, dass das Paket, das die empfangene Synchronisationsnachricht trägt, angibt, dass ein Transport mittels der Synchronisationstransporttabelle auszuführen ist,
wobei der Ausgangsport für das Paket, das die Synchronisationsnachricht trägt, dann als Funktion eines Eingangsports, auf dem das Paket, das die Synchronisationsnachricht trägt, empfangen wird, und durch Lesen der Synchronisationstransporttabelle bestimmt (E5) wird.

2. Transportverfahren nach Anspruch 1, wobei eine lokale Adresse für das Synchronisationsprotokoll, die in dem Paket, das die empfangene Synchronisationsnachricht trägt, enthalten ist, angibt, dass ein Transport mittels der Synchronisationstransporttabelle auszuführen ist.

3. Transportverfahren nach Anspruch 1, wobei dann, wenn die empfangene Synchronisationsnachricht eine Information bezüglich einer Synchronisationsdomäne trägt, der Ausgangsport außerdem als Funktion dieser Information bestimmt wird.

4. Transportverfahren nach Anspruch 1, wobei eine Synchronisationsnachricht, die eine Verzögerungsmaßnahme anfordert, eine Adresse der Senderanlage der Nachricht trägt und eine Anlage, die die Nachricht verarbeitet, die Adresse der Senderanlage anhand der Nachricht erhält, um eine Antwortsynchronisationsnachricht zu der Adresse des Senders zu senden.

5. Transportverfahren nach Anspruch 1, wobei die Empfängeranlage einer Synchronisationsnachricht, die eine Verzögerungsmaßnahme anfordert, die Adresse der Senderanlage anhand des Kopfes des Pakets, das die Nachricht trägt, erhält, um eine Antwortsynchronisationsnachricht zu der Adresse des Senders zu senden.

6. Transportverfahren nach Anspruch 1, wobei die Zwischenanlage eine Synchronisationsnachricht, die eine Verzögerungsmaßnahme anfordert, empfängt, aus der empfangenen Nachricht eine PTP-Kennung und eine Folgennummer extrahiert und eine Kennung des Ports, auf dem die Nachricht empfangen wird, in Zuordnung zu der PTP-Kennung und der Folgennummer, die extrahiert worden sind, speichert, um später eine Antwortsynchronisationsnachricht, die die PTP-Kennung und die Folgennummer enthält, auf dem zugeordneten gespeicherten Port zu transportieren.

7. Anlage zum Transportieren von Synchronisationsnachrichten in einem Kommunikationsnetz durch Pakete, wobei ein Paket mittels einer Transporttabelle, die globale Transporttabelle genannt wird, transportiert wird, die Folgendes umfasst:
- Mittel zum Detektieren eines Pakets, das eine Synchronisationsnachricht trägt, in einem Paketstrom;
- Mittel zum Bestimmen eines Ausgangsports;
- Mittel (104) zum Modifizieren der Synchronisationsnachricht mit Hilfe einer Information, die eine Transitzeit auf Höhe der Anlage darstellt;
- Mittel (102) zum Senden eines Pakets, das die modifizierte Synchronisationsnachricht trägt, auf dem bestimmten Ausgangsport,
**dadurch gekennzeichnet, dass** die Anlage außerdem Folgendes umfasst:
- Mittel zum Konfigurieren einer Synchronisationstransporttabelle, in der eine Zuordnung zwischen einem Eingangsport und wenigstens einem Ausgangsport gespeichert ist,
- Verifikationsmittel, die dafür ausgelegt sind, zu verifizieren, dass das Paket, das die empfangene Synchronisationsnachricht trägt, angibt, dass ein Transport mittels der Synchronisationstransporttabelle auszuführen ist,
und dass die Bestimmungsmittel außerdem dafür ausgelegt sind, den Ausgangsport für das Paket, das die Synchronisationsnachricht trägt, als Funktion eines Eingangsports, auf dem das Paket, das die Synchronisationsnachricht trägt, empfangen wird, und durch Lesen der Synchronisationstransporttabelle zu bestimmen.

8. System (10) zum Transportieren von Synchronisationsnachrichten, das wenigstens eine Anlage nach Anspruch 7 und eine Anlage, die dafür ausgelegt ist, ein Paket, das eine Synchronisationsnachricht trägt und angibt, dass ein Transport mittels der Synchronisationstransporttabelle auszuführen ist, zu senden, umfasst.

9. Transportsystem nach Anspruch 8, das außerdem Anlagen umfasst, die einen Hardware-Träger des Typs "Boundary Clock" enthalten, der gemäß der Norm PTPv2 definiert ist.

10. Computerprogramm, das Befehle enthält, um das Verfahren zum Transportieren von Synchronisationsnachrichten nach Anspruch 1 auszuführen, die von einer Anlage eines Kommunikationsnetzes durch Pakete ausgeführt werden, wenn dieses Programm durch einen Prozessor ausgeführt wird.

## Claims

1. Method for routing synchronization messages in a packet communication network, in which a packet is routed by means of a routing table, referred to as a global routing table, said method comprising the following steps implemented by a piece of equipment in the network:
- detection (E3) of a packet carrying a synchronization message in a packet stream;
- determination of at least one output port;
- sending of a packet carrying the modified synchronization message to the determined output port, the synchronization message being modified using a piece of information that is representative of a transit time for said equipment;
**characterized in that** the method furthermore comprises:
- a step (E1) of configuration of a synchronization routing table that stores at least one association between an input port and at least one output port;
- a step (E4) of verification that the packet carrying the received synchronization message indicates that routing by means of the synchronization routing table needs to be carried out,
the output port for said packet carrying the synchronization message then being determined (E5) on the basis of an input port on which the packet carrying the synchronization message is received and by reading the synchronization routing table.

2. Routing method according to Claim 1, in which a local address for the synchronization protocol, which address is included in the packet carrying the received synchronization message, indicates that routing by means of the synchronization routing table needs to be carried out.

3. Routing method according to Claim 1, in which, the received synchronization message carrying a piece of information relating to a synchronization domain, the output port is furthermore determined on the basis of said information.

4. Routing method according to Claim 1, in which a synchronization message requiring a delay measurement carries an address for the equipment sending the message and a piece of equipment processing the message obtains the address of the sending equipment from the message in order to send a response synchronization message to the address of the sender.

5. Routing method according to Claim 1, in which a piece of equipment receiving a synchronization message requiring a delay measurement obtains the address of the sending equipment from the header of the packet carrying said message in order to send a response synchronization message to the address of the sender.

6. Routing method according to Claim 1, in which the intermediate equipment receives a synchronization message requiring a delay measurement, extracts a PTP identifier and a sequence number from the received message and stores an identifier for the port that is used to receive the message in association with the PTP identifier and the sequence number that have been extracted, in order to subsequently route a response synchronization message comprising the PTP identifier and the sequence number to the port stored in association.

7. Piece of equipment for routing synchronization messages in a packet communication network, in which a packet is routed by means of a routing table, referred to as a global routing table, comprising:
- means for detecting a packet carrying a synchronization message in a packet stream;
- means for determining an output port;
- means for modifying (104) the synchronization message using a piece of information that is representative of a transit time for said equipment;
- means for sending (102) a packet carrying the modified synchronization message to the determined output port,
**characterized in that** the equipment furthermore comprises:
- means for configuring a synchronization routing table that stores an association between an input port and at least one output port,
- verification means that are designed to verify that the packet carrying the received synchronization message indicates that routing by means of the synchronization routing table needs to be carried out,
and **in that** the determination means are furthermore designed to determine the output port for said packet carrying the synchronization message on the basis of an input port on which the packet carrying the synchronization message is received and by reading the synchronization routing table.

8. System (10) for routing synchronization messages comprising at least one piece of equipment according to Claim 7 and a piece of equipment that is designed to send a packet carrying a synchronization message and indicating that routing by means of the synchronization routing table needs to be carried out.

9. Routing system according to Claim 8, furthermore comprising pieces of equipment having a hardware medium of "Boundary Clock" type that is defined in the PTPv2 standard.

10. Computer program having instructions for implementing the method for routing synchronization messages according to Claim 1, said instructions being implemented by a piece of equipment in a packet communication network, when said program is executed by a processor.
